# EUROPÄISCHE PATENTSCHRIFT

(11) **EP 4 275 127 B1**
(45) Veröffentlichungstag und Bekanntmachung des Hinweises auf die Patenterteilung: **17.09.2025**
(21) Anmeldenummer: 21801083.3
(22) Anmeldetag: 26.10.2021
(51) Int. Cl.: G06F 13/38, H04L 12/40, H04L 12/407, H04L 12/12

(54) **KOMMUNIKATIONSNETZWERK FÜR EIN FAHRZEUG UND VERFAHREN ZUM BETREIBEN EINES KOMMUNIKATIONSNETZWERKS**
COMMUNICATION NETWORK FOR A VEHICLE AND METHOD FOR OPERATING A COMMUNICATION NETWORK
RÉSEAU DE COMMUNICATION POUR UN VÉHICULE ET PROCÉDÉ DE FONCTIONNEMENT D'UN RÉSEAU DE COMMUNICATION

(30) Priorität: 08.01.2021 DE 102021200095
(43) Veröffentlichungstag der Anmeldung: 15.11.2023
(73) Patentinhaber: ZF Friedrichshafen AG, 88046 Friedrichshafen (DE)
(72) Erfinder: GRODDE, Benjamin, 88212 Ravensburg (DE); GAGG, Daniel, 88074 Meckenbeuren (DE)
(74) Vertreter: ZF Friedrichshafen AG
(86) Internationale Anmeldenummer: PCT/EP2021/079589
(87) Internationale Veröffentlichungsnummer: WO 2022/148563

(56) Entgegenhaltungen:
- CN-U- 209 400 918
- ANONYMOUS: "Controller Area Network – Wikipedia - Version of 09. August 2018", 9 August 2018 (2018-08-09), XP055614664, Retrieved from the Internet <URL:https://de.wikipedia.org/w/index.php?title=Controller_Area_Network&oldid=179855675#Objekt-Identifier> [retrieved on 20190822]
- "MCP2551 High-Speed CAN Transceiver", DS21667D, 1 January 2003 (2003-01-01), pages 1 - 22, XP055022728, Retrieved from the Internet <URL:http://ww1.microchip.com/downloads/en/devicedoc/21667d.pdf> [retrieved on 20120323]

## Beschreibung

Der vorliegende Ansatz bezieht sich auf ein Kommunikationsnetzwerk für ein Fahrzeug und ein Verfahren zum Betreiben eines Kommunikationsnetzwerks.

Im Fahrzeug sind häufig viele einzelne Komponenten mit einer Kommunikationsschnittstelle zu verbinden. Auch innerhalb einer Komponente sollen oft mehrere Teilkomponenten miteinander kommunizieren. Beispielswiese ein Steuergerät mit einem Sensor. Diese Kommunikationsschnittstelle kann beispielsweise mit einer CAN-Kommunikation, beispielsweise über einen CAN-Bus, realisiert sein.

CN 209 400 918 U offenbart ein Kommunikationsnetzwerk für ein Fahrzeug. Das Kommunikationsnetzwerk (CAN-Bus) weist einer erste elektronische Komponente und eine zweite elektronische Komponente auf, jeweils versehen mit einer Ausgangs- und einer Eingangsschnittstelle. Ein Und-Gatter ist eingangsseitig mit den jeweiligen Ausgangsschnittstellen verbunden. Ein Ausgang es Und-Gatters ist ausgebildet, um unter Verwendung der Informationen der beiden elektronischen Komponenten ein Ergebnis zu generieren. Dieses wird zum Eingang eines CAN-Transceivers geleitet und von dort auf den CAN-Bus. Das Signal wird auch vom CAN-Bus durch den CAN-Transceiver empfangen und an die Eingangsschnittstellen der elektronischen Komponenten geleitet. CN 209 400 918 U stellt damit gewissermaßen eine Vereinfachung eines CAN-Bus-Interfaces für mehrere elektronische Komponenten in Kombination dar.

Vor diesem Hintergrund schafft der vorliegende Ansatz ein verbessertes Kommunikationsnetzwerk für ein Fahrzeug und ein Verfahren zum Betreiben eines verbesserten Kommunikationsnetzwerks gemäß den Hauptansprüchen. Vorteilhafte Ausgestaltungen ergeben sich aus den Unteransprüchen und der nachfolgenden Beschreibung.

Die mit dem vorgestellten Ansatz erreichbaren Vorteile bestehen darin, dass eine vereinfachte und kostengünstig realisierbare Kommunikationsschnittstelle zwischen zumindest zwei elektronischen Komponenten in einem Fahrzeug ermöglicht wird.

Ein Kommunikationsnetzwerk für ein Fahrzeug weist eine erste elektronische Komponente, zumindest eine zweite elektronische Komponente und ein Und-Gatter auf. Die erste elektronische Komponente weist eine erste Ausgangsschnittstelle zum Ausgeben einer ersten Information und eine erste Eingangsschnittstelle zum Empfangen einer weiteren ersten Information auf. Die zweite elektronische Komponente weist eine zweite Ausgangsschnittstelle zum Ausgeben einer zweiten Information und eine zweite Eingangsschnittstelle zum Empfangen einer weiteren zweiten Information auf. Das Und-Gatter weist einen ersten Und-Gatter-Eingang, der mit der ersten Ausgangsschnittstelle verbunden ist, und zumindest einen zweiten Und-Gatter-Eingang, der mit der zweiten Ausgangsschnittstelle verbunden ist, und einen Und-Gatter-Ausgang auf, der ausgebildet ist, um unter Verwendung der ersten Information und zweiten Information ein Ergebnis zu generieren und an die erste Eingangsschnittstelle und/oder zweite Eingangsschnittstelle bereitzustellen, wozu der Und-Gatter-Ausgang direkt mit der ersten Eingangsschnittstelle und zweiten Eingangsschnittstelle verbunden ist.

Bei der ersten elektronischen Komponente und/oder zweiten elektronischen Komponente kann es sich um eine beliebige elektronische Fahrzeugkomponente handeln, welche im Betrieb mit einer oder mehreren anderen Fahrzeugkomponenten in dem Fahrzeug kommuniziert. Bei der ersten Ausgangsschnittstelle und/oder zweiten Ausgangsschnittstelle kann es sich je um einen sogenannten "Transceive-Ausgang" eines Transceivers der jeweiligen elektronischen Komponente handeln. Entsprechend kann es sich bei der ersten Eingangsschnittstelle und/oder zweiten Eingangsschnittstelle je um einen sogenannten "Receive-Eingang" eines Receivers der jeweiligen elektronischen Komponente handeln. Die erste Eingangsschnittstelle kann ausgebildet sein, um als die weitere erste Information das Ergebnis zu empfangen und/oder die zweite Eingangsschnittstelle kann ausgebildet sein, um als die weitere zweite Information das Ergebnis zu empfangen. Ein solches Kommunikationsnetzwerk ermöglicht es vorteilhafterweise, auf einen teuren und komplexen CAN-Bus (Controller Area Network) zwischen zwei elektronischen Komponenten zu verzichten, wobei dennoch eine Kommunikation zwischen den elektronischen Komponenten ermöglicht ist. So kann beispielsweise bei der Übertragung der ersten Information und/oder zweiten Information an das Und-Gatter und/oder des Ergebnisses an die elektronischen Komponenten jeweils lediglich ein einfacher Verbindungsdraht verwendet werden und vorteilhafterweise auf eine teure und komplexe sogenannte "physische Schicht", auch "Bitübertragungsschicht", oder englisch "Physical layer" oder "Layer 1" genannt, wie sie standardmäßig bei einem CAN-Bus verwendet wird, verzichtet werden. Im Betrieb des Netzwerkes kann ein Spannungspegel an der ersten Ausgangschnittstelle und dem ersten Und-Gatter-Eingang gleich sein. Entsprechend kann ein Spannungspegel an der zweiten Ausgangschnittstelle und dem zweiten Und-Gatter-Eingang gleich sein. Ferner kann ein Spannungspegel an dem Und-Gatter-Ausgang und der ersten Eingangsschnittstelle und/oder zweiten Eingangsschnittstelle gleich sein, wenn diese miteinander verbunden sind. Zusätzliche Transceiver zwischen den elektronischen Komponenten sind ferner ebenfalls nicht notwendig.

Der erste Und-Gatter-Eingang kann direkt mit der ersten Ausgangsschnittstelle und/oder der zweite Und-Gatter-Eingang direkt mit der zweiten Ausgangsschnittstelle verbunden sein. Als direkt ist eine unmittelbare Verbindung zu verstehen, also dass mit Ausnahme möglicherweise eines Verbindungselements kein weiteres elektronisches Bauteil zwischen dem ersten Und-Gatter-Eingang und der ersten Ausgangsschnittstelle und/oder zwischen dem zweiten Und-Gatter-Eingang und der zweiten Ausgangsschnittstelle geschaltet ist. So ist eine direkte und schnelle Übermittlung der ersten Information und/oder zweiten Information ermöglicht.

Gemäß einer Ausführungsform kann die erste Ausgangsschnittstelle ausgebildet sein, um die erste Information als eine im CAN-Bus-Protokoll-Datenformat bereitgestellte Information an den ersten Und-Gatter-Eingang bereitzustellen und/oder die zweite Ausgangsschnittstelle ausgebildet sein, um die zweite Information als eine im CAN-Bus-Protokoll-Datenformat bereitgestellte Information an den zweiten Und-Gatter-Eingang bereitzustellen. Ferner kann der Und-Gatter-Ausgang ausgebildet sein, um das Ergebnis als ein im CAN-Bus-Protokoll-Datenformat bereitgestelltes Ergebnis an die erste Eingangsschnittstelle und/oder zweite Eingangsschnittstelle bereitzustellen.

Die erste Ausgangsschnittstelle und/oder die zweite Ausgangsschnittstelle kann ausgebildet sein, um in einem Ruhezustand ein Signal mit einem hohen Signalpegel auszugeben und in einem Sendezustand ein weiteres Signal mit einem niedrigen Signalpegel auszugeben. Eine solche Ausführungsform bietet den Vorteil, dass eine Signalisierung von Daten durch die erste und/oder zweite Komponente entsprechend der bisherigen Vorgehensweise erfolgen kann. Speziell kann bei dem Senden einer Information mit hoher Priorität ein niedriger Signalpegel verwendet werden, um auf das Vorliegen einer solchen hoch-priorisierten Information an einer der Komponenten auf dem Kommunikationsnetzwerk hinzuweisen. Dies entspricht der bisherigen Vorgehensweise bei der Signalisierung einer hoch-priorisierten Information über den CAN-Bus ebenfalls durch die Verwendung eines Tokens mit niedrigem Wert.

Es ist weiterhin von Vorteil, wenn das Kommunikationsnetzwerk gemäß einer Ausführungsform ein zwischen der ersten Ausgangsschnittstelle und dem ersten Und-Gatter-Eingang angeordnetes Verbindungselement und/oder das zwischen der zweiten Ausgangsschnittstelle und dem zweiten Und-Gatter-Eingang angeordnete zweite Verbindungselement aufweist, als einzelne Drahtleitung ausgebildet ist. Eine entsprechendes zweites Verbindungselement kann zwischen dem zweiten Und-Gatter-Eingang und der zweiten Eingangsschnittstelle angeordnet sein. Analog kann auch ein entsprechendes drittes Verbindungselement ferner zwischen dem Und-Gatter-Ausgang und der ersten Eingangsschnittstelle und der zweiten Eingangsschnittstelle angeordnet sein. Durch die Verwendung einer einfachen Drahtleitung (die beispielsweise auch als einzelner Draht, also ohne die Verwendung mehrere parallelgeschalteter Drähte, implementiert sein kann), kann quasi ein "CAN-Bus" ohne der physischen Schicht/Bitübertragungsschicht bzw. "physical layer" realisiert sein. Der Entfall der physischen Schicht bzw. eines entsprechenden Datenwandlers oder Transceivers bedeutet für die erforderliche Hardware-Umsetzung eine direkte Einsparungen bei Bauraum und Kosten, sowie eine kleinere Dimensionierung der vorgelagerten Spannungsversorgung, was einen geringeren Energieverbrauch, Bauraum und geringere Kosten bedeutet.

Der Und-Gatter-Ausgang ist erfindungsgemäß direkt mit der ersten Eingangsschnittstelle und zweiten Eingangsschnittstelle verbunden. So ist eine direkte und schnelle Übermittlung des Ergebnisses ermöglicht. So kann das Ergebnis einerseits an eine oder beide elektronischen Komponenten übertragen und der Rückpfad von dem Und-Gatter zurück an die elektronischen Komponenten ferner einer Überprüfung des Ergebnisses dienen.

Gemäß einer Ausführungsform kann die erste elektronische Komponente als ein Steuergerät und/oder die zweite elektronische Komponente als ein Sensor und/oder weiteres Steuergerät ausgeformt sein. Das Steuergerät kann beispielsweise als ein Motorsteuergerät zum Steuern eines Fahrzeugmotors ausgebildet sein. Bei dem Sensor kann es sich beispielsweise um eine Lambdasonde für einen Auspuff des Fahrzeugs handeln.

Es ist weiterhin von Vorteil, wenn das Kommunikationsnetzwerk gemäß einer Ausführungsform zumindest eine dritte elektronische Komponente mit einer dritten Ausgangsschnittstelle zum Ausgeben einer dritten Information und einer dritten Eingangsschnittstelle zum Empfangen einer weiteren dritten Information aufweist, wobei das Und-Gatter einen dritten Und-Gatter-Eingang aufweist, der mit der dritten Ausgangsschnittstelle verbunden ist, und der Und-Gatter-Ausgang ausgebildet ist, um das Ergebnis unter Verwendung ferner der dritten Information zu generieren und für die dritte Eingangsschnittstelle bereitzustellen. So ist eine Kommunikation von mehr elektronischen Komponenten ermöglicht.

Es wird ein Verfahren zum Betreiben eines Kommunikationsnetzwerks in einer der vorangehend beschriebenen Varianten vorgestellt. Das Verfahren umfasst einen Schritt des Ausgebens, einen Schritt des Einlesens und einen Schritt des Generierens. Im Schritt des Ausgebens werden die erste Information an der ersten Ausgangsschnittstelle der ersten elektronischen Komponente und die zweite Information an der zweiten Ausgangsschnittstelle der zweiten elektronischen Komponente ausgegeben. Im Schritt des Einlesens werden die erste Information über den ersten Und-Gatter-Eingang und die zweite Information über den zweiten Und-Gatter-Eingang eingelesen. Im Schritt des Generierens wird ein Ergebnis unter Verwendung der ersten Information und zweiten Information generiert und das Ergebnis für die erste Eingangsschnittstelle und/oder zweite Eingangsschnittstelle an dem Und-Gatter-Ausgang bereitgestellt.

Dieses Verfahren kann beispielsweise in Software oder Hardware oder in einer Mischform aus Software und Hardware beispielsweise in einem Steuergerät implementiert sein.

Im Schritt des Ausgebens kann die erste Information als ein Signal mit einem hohen Signalpegel ausgegeben werden, wenn die erste Ausgangsschnittstelle in einem Ruhezustand ist und als ein weiteres Signal mit einem niedrigen Signalpegel ausgegeben werden, wenn die erste Ausgangsschnittstelle in einem Sendezustand ist und/oder die zweite Information kann als das Signal mit einem hohen Signalpegel ausgegeben werden, wenn die zweite Ausgangsschnittstelle in einem Ruhezustand ist und als ein weiteres Signal mit einem niedrigen Signalpegel ausgegeben werden, wenn die zweite Ausgangsschnittstelle in einem Sendezustand ist.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante des Ansatzes in Form einer Vorrichtung kann die dem Ansatz zugrunde liegende Aufgabe schnell und effizient gelöst werden.

Eine Vorrichtung kann ein elektrisches Gerät sein, das elektrische Signale, beispielsweise Sensorsignale verarbeitet und in Abhängigkeit davon Steuersignale ausgibt. Die Vorrichtung kann eine oder mehrere geeignete Schnittstelle aufweisen, die hard- und/oder softwaremäßig ausgebildet sein können. Bei einer hardwaremäßigen Ausbildung können die Schnittstellen beispielsweise Teil einer integrierten Schaltung sein, in der Funktionen der Vorrichtung umgesetzt sind. Die Schnittstellen können auch eigene, integrierte Schaltkreise sein oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
- Fig. 1: eine schematische Darstellung eines Fahrzeugs mit einem Kommunikationsnetzwerk gemäß einem Ausführungsbeispiel; und
- Fig. 2: ein Ablaufdiagramm eines Verfahrens gemäß einem Ausführungsbeispiel zum Betreiben eines Kommunikationsnetzwerks.

In der nachfolgenden Beschreibung bevorzugter Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

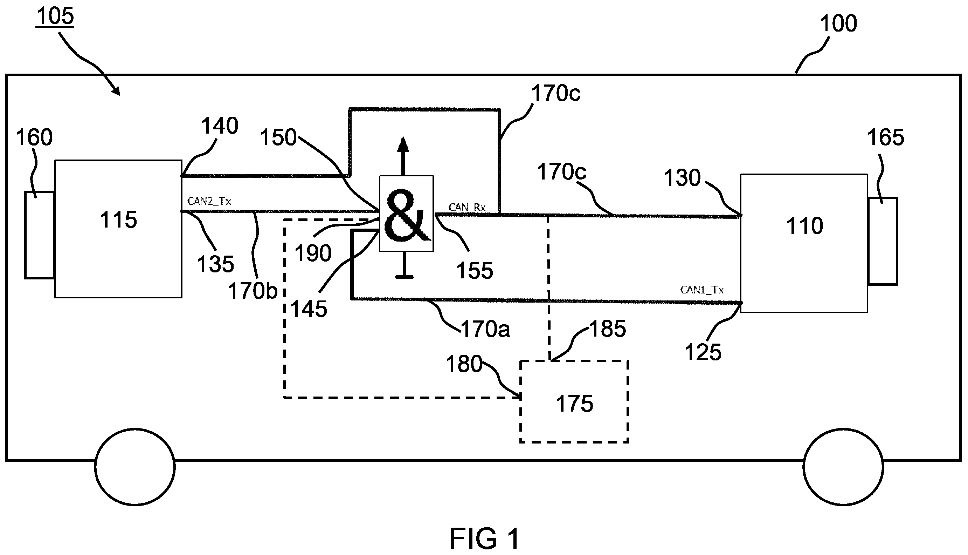

Fig. 1 zeigt eine schematische Darstellung eines Fahrzeugs 100 mit einem Kommunikationsnetzwerk 105 gemäß einem Ausführungsbeispiel.

Lediglich beispielhaft ist das Kommunikationsnetzwerk 105 gemäß diesem Ausführungsbeispiel in oder an dem Fahrzeug 100 aufgenommen; denkbar ist jedoch auch die Verwendung des Kommunikationsnetzwerks 105 in anderen technischen Einsatzumgebungen.

Das Kommunikationsnetzwerk 105 weist eine erste elektronische Komponente 110, zumindest eine zweite elektronische Komponente 115 und ein Und-Gatter & auf. Die erste elektronische Komponente 110 weist eine erste Ausgangsschnittstelle 125 zum Ausgeben einer ersten Information und eine erste Eingangsschnittstelle 130 zum Empfangen einer weiteren ersten Information auf. Die zweite elektronische Komponente 115 weist eine zweite Ausgangsschnittstelle 135 zum Ausgeben einer zweiten Information und eine zweite Eingangsschnittstelle 140 zum Empfangen einer weiteren zweiten Information auf. Das Und-Gatter & weist einen ersten Und-Gatter-Eingang 145, der mit der ersten Ausgangsschnittstelle 125 verbunden ist, und zumindest einen zweiten Und-Gatter-Eingang 150, der mit der zweiten Ausgangsschnittstelle 135 verbunden ist, und einen Und-Gatter-Ausgang 155 auf, der ausgebildet ist, um unter Verwendung der ersten Information und zweiten Information ein Ergebnis zu generieren und für die erste Eingangsschnittstelle 130 und/oder zweite Eingangsschnittstelle 140 bereitzustellen.

Bei der ersten elektronischen Komponente 110 handelt es sich gemäß diesem Ausführungsbeispiel lediglich beispielhaft um ein Steuergerät und/oder bei der zweiten elektronische Komponente 115 um einen Sensor und/oder ein weiteres Steuergerät. Das Steuergerät ist gemäß diesem Ausführungsbeispiel beispielhaft als ein Motorsteuergerät zum Steuern eines Fahrzeugmotors 160 des Fahrzeugs 100 ausgebildet. Bei dem Sensor handelt es sich gemäß diesem Ausführungsbeispiel beispielhaft um eine Lambdasonde für einen Auspuff 165 des Fahrzeugs 100. Gemäß einem alternativen Ausführungsbeispiel ist die erste elektronische Komponente 110 und/oder zweite elektronische Komponente 115 als eine beliebige andere elektronische Fahrzeugkomponente ausgebildet, welche im Betrieb mit einer oder mehreren anderen Fahrzeugkomponenten in dem Fahrzeug 100 kommuniziert. Bei der ersten Ausgangsschnittstelle 125 und/oder zweiten Ausgangsschnittstelle 135 handelt es sich gemäß diesem Ausführungsbeispiel je um einen sogenannten "Transceive-Ausgang" eines Transceivers der jeweiligen elektronischen Komponente 110, 115. Entsprechend handelt es sich gemäß diesem Ausführungsbeispiel bei der ersten Eingangsschnittstelle 130 und/oder zweiten Eingangsschnittstelle 140 je um einen sogenannten "Receive-Eingang" eines Receivers der jeweiligen elektronischen Komponente 110, 115. Die erste Eingangsschnittstelle 130 ist gemäß diesem Ausführungsbeispiel ausgebildet, um als die weitere erste Information das Ergebnis zu empfangen und/oder die zweite Eingangsschnittstelle 140 ist gemäß diesem Ausführungsbeispiel ausgebildet, um als die weitere zweite Information das Ergebnis zu empfangen.

Der erste Und-Gatter-Eingang 145 ist gemäß diesem Ausführungsbeispiel direkt mit der ersten Ausgangsschnittstelle 125 und/oder der zweite Und-Gatter-Eingang 150 direkt mit der zweiten Ausgangsschnittstelle 135 verbunden.

Die erste Ausgangsschnittstelle 125 ist gemäß diesem Ausführungsbeispiel ausgebildet, um die erste Information als eine im CAN-Bus-Protokoll-Datenformat bereitgestellte Information an den ersten Und-Gatter-Eingang 145 bereitzustellen und/oder die zweite Ausgangsschnittstelle 135 ist gemäß diesem Ausführungsbeispiel ausgebildet, um die zweite Information als eine im CAN-Bus-Protokoll-Datenformat bereitgestellte Information an den zweiten Und-Gatter-Eingang 150 bereitzustellen. Ferner ist der Und-Gatter-Ausgang 155 gemäß diesem Ausführungsbeispiel ausgebildet, um das Ergebnis als ein im CAN-Bus-Protokoll-Datenformat bereitgestelltes Ergebnis an die erste Eingangsschnittstelle 130 und/oder zweite Eingangsschnittstelle 140 bereitzustellen.

Die erste Ausgangsschnittstelle 125 und/oder die zweite Ausgangsschnittstelle 135 ist gemäß diesem Ausführungsbeispiel ausgebildet, um in einem Ruhezustand ein Signal mit einem hohen Signalpegel auszugeben und in einem Sendezustand ein weiteres Signal mit einem niedrigen Signalpegel auszugeben.

Das Kommunikationsnetzwerk 105 weist gemäß diesem Ausführungsbeispiel ein zwischen der ersten Ausgangsschnittstelle 125 und dem ersten Und-Gatter-Eingang 145 angeordnetes Verbindungselement 170a auf, das eine Datensicherungsschicht und/oder keine physische Schicht aufweist. Ein entsprechendes zweites Verbindungselement 170b ist gemäß diesem Ausführungsbeispiel zwischen der zweiten Ausgangsschnittstelle 135 und dem zweiten Und-Gatter-Eingang 150 angeordnet. Weiterhin ist ein entsprechendes drittes Verbindungselement 170c gemäß diesem Ausführungsbeispiel zwischen dem Und-Gatter-Ausgang 155 und der ersten Eingangsschnittstelle 130 und der zweiten Eingangsschnittstelle 140 angeordnet. Der Und-Gatter-Ausgang 155 ist gemäß diesem Ausführungsbeispiel direkt mit der ersten Eingangsschnittstelle 130 und zweiten Eingangsschnittstelle 140 verbunden.

Lediglich optional weist das Kommunikationsnetzwerk 105 gemäß diesem Ausführungsbeispiel ferner zumindest eine dritte elektronische Komponente 175 mit einer dritten Ausgangsschnittstelle 180 zum Ausgeben einer dritten Information und einer dritten Eingangsschnittstelle 185 zum Empfangen einer weiteren dritten Information auf, wobei das Und-Gatter einen dritten Und-Gatter-Eingang 190 aufweist, der mit der dritten Ausgangsschnittstelle 180 verbunden ist, und der Und-Gatter-Ausgang 155 ausgebildet ist, um das Ergebnis unter Verwendung ferner der dritten Information zu generieren und ferner für die dritte Eingangsschnittstelle 185 bereitzustellen.

Das hier vorgestellte Kommunikationsnetzwerk 105 realisiert eine vereinfachte Kommunikationsschnittstelle zwischen zwei oder mehreren elektronischen Komponenten 110, 115, 175. Das Kommunikationsnetzwerk 105 realisiert hierzu eine CAN-Schnittstelle ohne den Physical layer und betrifft elektrische Steuergeräte und/oder Sensoren.

Die elektronischen Komponenten 110, 115, 175 sind gemäß einem Ausführungsbeispiel voneinander unabhängige Fahrzeugkomponenten, welche miteinander kommunizieren, oder gemäß einem anderen Ausführungsbeispiel Teilkomponenten einer Fahrzeugkomponente, welche untereinander kommunizieren. Beispielswiese ein Steuergerät mit einem Sensor.

Um die Kommunikationsschnittstelle zwischen den beiden Komponenten/Teilkomponenten oder mehreren Komponenten darzustellen, wird gemäß diesem Ausführungsbeispiel das CAN-Protokoll verwendet ohne den Aufwand des Physical Layers (Transceiver in beiden Teilkomponenten) zu betreiben und es werden gemäß einem Ausführungsbeispiel vorteilhafterweise dennoch die Absicherungen von einer CAN-Kommunikation und eine hohe Datenrate genutzt, für beispielsweise eine zyklische Redundanzprüfung, englisch "Cyclic Redundancy Check", kurz " CRC". Bei der zyklischen Redundanzprüfung geschieht gemäß einem Ausführungsbeispiel eine Überprüfung von Daten auf Unversehrtheit in einem Speicher oder gemäß diesem Ausführungsbeispiel nach der Datenübertragung. Der Entfall des Physical Layers bedeutet für die Hardware eine direkte Einsparungen bei Bauraum und Kosten sowie eine kleinere Dimensionierung der vorgelagerten Spannungsversorgung, was vorteilhafterweise einen geringeren Energieverbrauch, Bauraum und geringere Kosten bedeutet.

Wie in Fig. 1 zu sehen ist, sind bei dem Kommunikationsnetzwerk 105 beide Transceive-Ausgänge, die auch als "CAN1_Tx" und "CAN2_Tx" bezeichnet werden können, der Komponenten/Teilkomponenten auf das logische UND-Gatter & verbunden und das Ergebnis aus dem Und-Gatter & ist gemäß einem Ausführungsbeispiel an beide Receive-Eingänge der Komponenten/Teilkomponenten verbunden. So ist gemäß einem Ausführungsbeispiel beispielsweise die Arbitrierung wie bei einem vollwertigen CAN durchführbar.

In einem Anwendungsbeispiel mit lediglich zwei der elektronischen Komponenten 110, 115 gibt die erste Ausgangsschnittstelle 125 das Signal mit dem hohen Signalpegel aus, das den Ruhezustand der ersten Ausgangsschnittstelle 125 repräsentiert und die zweite Ausgangsschnittstelle 135 gibt ebenfalls das Signal mit dem hohen Signalpegel aus, das den Ruhezustand der zweiten Ausgangsschnittstelle 135 repräsentiert. Bei Anliegen zweier Signale mit je hohem Signalpegel an den Und-Gatter-Eingängen 145, 150 wird das Ergebnis von dem Und-Gatter & als ein Signal mit hohem Signalpegel generiert, das den Ruhezustand beider elektronischer Komponenten 110, 115 repräsentiert. Beide Komponenten 110, 115 erkennen nun durch Anliegen des Signals an der jeweiligen Eingangsschnittstelle 130, 140, dass die jeweils andere Komponente 110, 115 keine Information sendet.

In einem weiteren Anwendungsbeispiel mit lediglich den zwei elektronischen Komponenten 110, 115 gibt die erste Ausgangsschnittstelle 125 das weitere Signal mit dem niedrigen Signalpegel aus, das den Sendezustand der ersten Ausgangsschnittstelle 125 repräsentiert und die zweite Ausgangsschnittstelle 135 gibt ebenfalls das weitere Signal mit dem niedrigen Signalpegel aus, das den Sendezustand der zweiten Ausgangsschnittstelle 135 repräsentiert. Bei Anliegen zweier weiterer Signale mit je niedrigem Signalpegel an den Und-Gatter-Eingängen 145, 150 wird das Ergebnis als ein weiteres Signal mit niedrigem Signalpegel generiert, das den Sendezustand beider elektronischer Komponenten 110, 115 repräsentiert. Ein solches Ergebnis ist ungewünscht, da nicht nachvollziehbar ist, von welcher der Komponenten 110, 115 welche Information kommt.

**In** einem weiteren Anwendungsbeispiel mit lediglich den zwei elektronischen Komponenten 110, 115 gibt die erste Ausgangsschnittstelle 125 das weitere Signal mit dem niedrigen Signalpegel aus, das den Sendezustand der ersten Ausgangsschnittstelle 125 repräsentiert und die zweite Ausgangsschnittstelle 135 gibt das Signal mit dem hohen Signalpegel aus, das den Ruhezustand der zweiten Ausgangsschnittstelle 135 repräsentiert. Bei Anliegen zweier unterschiedlicher Signale mit je unterschiedlichen Signalpegeln an den Und-Gatter-Eingängen 145, 150 wird das Ergebnis als ein weiteres Signal mit niedrigem Signalpegel generiert. Die erste elektronische Komponente 110, die sendet, kann nun sicher sein, dass ihre erste Information am Gatter-Ausgang 155 ausgegeben wird, da das dritte Verbindungselement 170c vorher unbelegt war und die andere zweite elektronische Komponente 115 analog die Belegung der dritten Verbindungselement 170c überwacht und nur auf das zweite Verbindungselement 170b Informationen sendet, wenn auf dem dritten Verbindungselement 170c keine Informationen übertragen werden.

In einem weiteren Anwendungsbeispiel mit lediglich den zwei elektronischen Komponenten 110, 115 gibt die erste Ausgangsschnittstelle 125 das Signal mit dem hohen Signalpegel aus, das den Ruhezustand der ersten Ausgangsschnittstelle 125 repräsentiert und die zweite Ausgangsschnittstelle 135 gibt das weitere Signal mit dem niedrigen Signalpegel aus, das den Sendezustand der zweiten Ausgangsschnittstelle 135 repräsentiert. Bei Anliegen zweier unterschiedlicher Signale mit je unterschiedlichen Signalpegeln an den Und-Gatter-Eingängen 145, 150 wird das Ergebnis als ein weiteres Signal mit niedrigem Signalpegel generiert. Die zweite elektronische Komponente 115, die sendet, kann nun sicher sein, dass ihre zweite Information am Gatter-Ausgang 155 ausgegeben wird, da das dritte Verbindungselement 170c vorher unbelegt war und die andere erste elektronische Komponente 110 analog die Belegung der dritten Verbindungselement 170c überwacht und nur auf das Verbindungselement 170a Informationen sendet, wenn auf dem dritten Verbindungselement 170c keine Informationen übertragen werden.

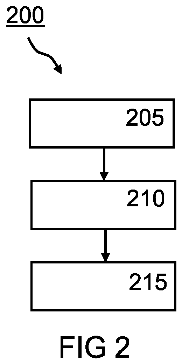

Fig. 2 zeigt ein Ablaufdiagramm eines Verfahrens 200 gemäß einem Ausführungsbeispiel zum Betreiben eines Kommunikationsnetzwerks. Dabei kann es sich um das in Fig. 1 beschriebene Kommunikationsnetzwerk handeln.

Das Verfahren 200 umfasst einen Schritt 205 des Ausgebens, einen Schritt 210 des Einlesens und einen Schritt 215 des Generierens. Im Schritt 205 des Ausgebens werden die erste Information an der ersten Ausgangsschnittstelle der ersten elektronischen Komponente und die zweite Information an der zweiten Ausgangsschnittstelle der zweiten elektronischen Komponente ausgegeben. Im Schritt 210 des Einlesens werden die erste Information über den ersten Und-Gatter-Eingang und die zweite Information über den zweiten Und-Gatter-Eingang eingelesen. Im Schritt 215 des Generierens wird ein Ergebnis unter Verwendung der ersten Information und zweiten Information generiert und das Ergebnis für die erste Eingangsschnittstelle und/oder zweite Eingangsschnittstelle an dem Und-Gatter-Ausgang bereitgestellt.

Gemäß diesem Ausführungsbeispiel wird im Schritt 210 des Ausgebens die erste Information als ein Signal mit einem hohen Signalpegel ausgegeben, wenn die erste Ausgangsschnittstelle in einem Ruhezustand ist und als ein weiteres Signal mit einem niedrigen Signalpegel ausgegeben, wenn die erste Ausgangsschnittstelle in einem Sendezustand ist und/oder die zweite Information als das Signal mit einem hohen Signalpegel ausgegeben, wenn die zweite Ausgangsschnittstelle in einem Ruhezustand ist und als ein weiteres Signal mit einem niedrigen Signalpegel ausgegeben, wenn die zweite Ausgangsschnittstelle in einem Sendezustand ist.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- &: Und-Gatter
- 100: Fahrzeug
- 105: Kommunikationsnetzwerk
- 110: erste elektronische Komponente
- 115: zweite elektronische Komponente
- 125: erste Ausgangsschnittstelle
- 130: erste Eingangsschnittstelle
- 135: zweite Ausgangsschnittstelle
- 140: zweite Eingangsschnittstelle
- 145: erster Und-Gatter-Eingang
- 150: zweiter Und-Gatter-Eingang
- 155: Und-Gatter-Ausgang
- 160: Fahrzeugmotor
- 165: Auspuff
- 170a: Verbindungselement
- 170b: zweites Verbindungselement
- 170c: drittes Verbindungselement
- 175: dritte elektronische Komponente
- 180: dritte Ausgangsschnittstelle
- 185: dritte Eingangsschnittstelle
- 190: dritter Und-Gatter-Eingang

- 200: Verfahren zum Betreiben eines Netzwerks
- 205: Schritt des Ausgebens
- 210: Schritt des Einlesens
- 215: Schritt des Generierens

## Patentansprüche

1. Kommunikationsnetzwerk (105) für ein Fahrzeug (100), wobei das Kommunikationsnetzwerk (105) die folgenden Merkmale aufweist:
eine erste elektronische Komponente (110) mit einer ersten Ausgangsschnittstelle (125) zum Ausgeben einer ersten Information und einer ersten Eingangsschnittstelle (130) zum Empfangen einer weiteren ersten Information;
zumindest eine zweite elektronische Komponente (115) mit einer zweiten Ausgangsschnittstelle (135) zum Ausgeben einer zweiten Information und einer zweiten Eingangsschnittstelle (140) zum Empfangen einer weiteren zweiten Information; und
ein Und-Gatter (&) mit einem ersten Und-Gatter-Eingang (145), der mit der ersten Ausgangsschnittstelle (125) verbunden ist, und zumindest einem zweiten Und-Gatter-Eingang (150), der mit der zweiten Ausgangsschnittstelle (135) verbunden ist, und einem Und-Gatter-Ausgang (155), der ausgebildet ist, um unter Verwendung der ersten Information und zweiten Information ein Ergebnis zu generieren und an die erste Eingangsschnittstelle (130) und/oder zweite Eingangsschnittstelle (140) bereitzustellen, wozu der Und-Gatter-Ausgang (155) direkt mit der ersten Eingangsschnittstelle (130) und zweiten Eingangsschnittstelle (140) verbunden ist.

2. Kommunikationsnetzwerk (105) gemäß Anspruch 1, bei dem der erste Und-Gatter-Eingang (145) direkt mit der ersten Ausgangsschnittstelle (125) und/oder der zweite Und-Gatter-Eingang (150) direkt mit der zweiten Ausgangsschnittstelle (135) verbunden ist.

3. Kommunikationsnetzwerk (105) gemäß einem der vorangegangenen Ansprüche, bei dem die erste Ausgangsschnittstelle (125) ausgebildet ist, um die erste Information als eine im CAN-Bus-Protokoll-Datenformat bereitgestellte Information an den ersten Und-Gatter-Eingang (145) bereitzustellen und/oder die zweite Ausgangsschnittstelle (145) ausgebildet ist, um die zweite Information als eine im CAN-Bus-Protokoll-Datenformat bereitgestellte Information an den zweiten Und-Gatter-Eingang (150) bereitzustellen.

4. Kommunikationsnetzwerk (105) gemäß einem der vorangegangenen Ansprüche, bei dem die erste Ausgangsschnittstelle (125) und/oder die zweite Ausgangsschnittstelle (135) ausgebildet ist, um in einem Ruhezustand ein Signal mit einem hohen Signalpegel auszugeben und in einem Sendezustand ein weiteres Signal mit einem niedrigen Signalpegel auszugeben.

5. Kommunikationsnetzwerk (105) gemäß einem der vorangegangenen Ansprüche, bei dem das zwischen der ersten Ausgangsschnittstelle (125) und dem ersten Und-Gatter-Eingang (145) angeordnete Verbindungselement (170a) und/oder das zwischen der zweiten Ausgangsschnittstelle (135) und dem zweiten Und-Gatter-Eingang (150) angeordnete zweite Verbindungselement (170b), das als einzelne Drahtleitung ausgebildet ist.

6. Kommunikationsnetzwerk (105) gemäß einem der vorangegangenen Ansprüche, bei dem die erste elektronische Komponente (110) als ein Steuergerät und/oder die zweite elektronische Komponente (115) als ein Sensor und/oder weiteres Steuergerät ausgeformt ist.

7. Kommunikationsnetzwerk (105) gemäß einem der vorangegangenen Ansprüche, mit einer dritten elektronischen Komponente (175) mit einer dritten Ausgangsschnittstelle (180) zum Ausgeben einer dritten Information und einer dritten Eingangsschnittstelle (185) zum Empfangen einer weiteren dritten Information, wobei das Und-Gatter (&) einen dritten Und-Gatter-Eingang (190) aufweist, der mit der dritten Ausgangsschnittstelle (180) verbunden ist, und der Und-Gatter-Ausgang (155) ausgebildet ist, um das Ergebnis unter Verwendung ferner der dritten Information zu generieren und für die dritte Eingangsschnittstelle (185) bereitzustellen.

8. Verfahren (200) zum Betreiben eines Kommunikationsnetzwerks (105) gemäß einem der vorangegangenen Ansprüche, wobei das Verfahren (200) die folgenden Schritte umfasst:
Ausgeben (205) der ersten Information an der ersten Ausgangsschnittstelle (125) der ersten elektronischen Komponente (110) und der zweiten Information an der zweiten Ausgangsschnittstelle (135) der zweiten elektronischen Komponente (115);
Einlesen (210) der ersten Information über den ersten Und-Gatter-Eingang (145) und die zweite Information über den zweiten Und-Gatter-Eingang (150); und
Generieren (215) eines Ergebnisses unter Verwendung der ersten Information und zweiten Information und Bereitstellen des Ergebnisses für die erste Eingangsschnittstelle (130) und/oder zweite Eingangsschnittstelle (140) an dem Und-Gatter-Ausgang (155).

9. Verfahren (200) gemäß Anspruch 8, bei dem im Schritt (205) des Ausgebens die erste Information als ein Signal mit einem hohen Signalpegel ausgegeben wird, wenn die erste Ausgangsschnittstelle (125) in einem Ruhezustand ist und als ein weiteres Signal mit einem niedrigen Signalpegel ausgegeben wird, wenn die erste Ausgangsschnittstelle (125) in einem Sendezustand ist und/oder die zweite Information als das Signal mit einem hohen Signalpegel ausgegeben wird, wenn die zweite Ausgangsschnittstelle (135) in einem Ruhezustand ist und als ein weiteres Signal mit einem niedrigen Signalpegel ausgegeben wird, wenn die zweite Ausgangsschnittstelle (135) in einem Sendezustand ist.

## Claims

1. Communication network (105) for a vehicle (100), the communication network (105) having the following features:
a first electronic component (110) having a first output interface (125) for outputting first information and a first input interface (130) for receiving further first information;
at least one second electronic component (115) having a second output interface (135) for outputting second information and a second input interface (140) for receiving further second information; and
an AND gate (&) having a first AND gate input (145), which is connected to the first output interface (125), and at least one second AND gate input (150), which is connected to the second output interface (135), and an AND gate output (155) designed to use the first information and the second information to generate a result and to deliver said result to the first input interface (130) and/or the second input interface (140), for which purpose the AND gate output (155) is connected directly to the first input interface (130) and the second input interface (140).

2. Communication network (105) according to Claim 1, in which the first AND gate input (145) is connected directly to the first output interface (125) and/or the second AND gate input (150) is connected directly to the second output interface (135).

3. Communication network (105) according to either of the preceding Claims, in which the first output interface (125) is designed to deliver the first information to the first AND gate input (145) as information delivered in the CAN bus protocol data format and/or the second output interface (145) is designed to deliver the second information to the second AND gate input (150) as information delivered in the CAN bus protocol data format.

4. Communication network (105) according to one of the preceding Claims, in which the first output interface (125) and/or the second output interface (135) is designed to output a signal with a high signal level in an idle state and to output a further signal with a low signal level in a transmission state.

5. Communication network (105) according to one of the preceding Claims, in which the connecting element (170a) arranged between the first output interface (125) and the first AND gate input (145) and/or the second connecting element (170b) arranged between the second output interface (135) and the second AND gate input (150) is in the form of a single wire line.

6. Communication network (105) according to one of the preceding Claims, in which the first electronic component (110) is in the form of a control unit and/or the second electronic component (115) is in the form of a sensor and/or a further control unit.

7. Communication network (105) according to one of the preceding Claims, comprising a third electronic component (175) having a third output interface (180) for outputting third information and a third input interface (185) for receiving further third information, the AND gate (&) having a third AND gate input (190) which is connected to the third output interface (180), and the AND gate output (155) being designed to generate the result by also using the third information and to deliver said result for the third input interface (185).

8. Method (200) for operating a communication network (105) according to one of the preceding Claims, the method (200) comprising the following steps:
outputting (205) the first information on the first output interface (125) of the first electronic component (110) and the second information on the second output interface (135) of the second electronic component (115);
reading in (210) the first information via the first AND gate input (145) and the second information via the second AND gate input (150); and
generating (215) a result by using the first information and the second information and delivering the result for the first input interface (130) and/or the second input interface (140) at the AND gate output (155).

9. Method (200) according to Claim 8, in which the outputting step (205) involves the first information being output as a signal with a high signal level if the first output interface (125) is in an idle state and being output as a further signal with a low signal level if the first output interface (125) is in a transmission state and/or the second information being output as the signal with a high signal level if the second output interface (135) is in an idle state and being output as a further signal with a low signal level if the second output interface (135) is in a transmission state.

## Revendications

1. Réseau de communication (105) pour un véhicule (100), le réseau de communication (105) présentant les caractéristiques suivantes :
un premier composant électronique (110) ayant une première interface de sortie (125) pour délivrer en sortie une première information et une première interface d'entrée (130) pour recevoir une première information supplémentaire ;
au moins un deuxième composant électronique (115) ayant une deuxième interface de sortie (135) pour délivrer en sortie une deuxième information et une deuxième interface d'entrée (140) pour recevoir une deuxième information supplémentaire ; et
une porte ET (&) comportant une première entrée de porte ET (145), qui est reliée à la première interface de sortie (125), et au moins une deuxième entrée de porte ET (150), qui est reliée à la deuxième interface de sortie (135), et une sortie de porte ET (155), qui est conçue pour générer un résultat en utilisant la première information et la deuxième information et pour fournir le résultat à la première interface d'entrée (130) et/ou à la deuxième interface d'entrée (140), la sortie de porte ET (155) étant à cet effet directement connectée à la première interface d'entrée (130) et à la deuxième interface d'entrée (140).

2. Réseau de communication (105) selon la revendication 1, dans lequel la première entrée de porte ET (145) est directement connectée à la première interface de sortie (125) et/ou la deuxième entrée de porte ET (150) est directement connectée à la deuxième interface de sortie (135).

3. Réseau de communication (105) selon l'une quelconque des revendications précédentes, dans lequel la première interface de sortie (125) est conçue pour fournir la première information sous la forme d'une information fournie au format de données du protocole CAN-Bus à la première entrée de porte ET (145) et/ou la deuxième interface de sortie (145) est conçue pour fournir la deuxième information sous la forme d'une information fournie au format de données du protocole CAN-Bus à la deuxième entrée de porte ET (150).

4. Réseau de communication (105) selon l'une quelconque des revendications précédentes, dans lequel la première interface de sortie (125) et/ou la deuxième interface de sortie (135) est conçue pour délivrer en sortie un signal ayant un niveau de signal élevé dans un état de repos et pour délivrer en sortie un signal supplémentaire ayant un faible niveau de signal dans un état d'émission.

5. Réseau de communication (105) selon l'une quelconque des revendications précédentes, dans lequel l'élément de connexion (170a) disposé entre la première interface de sortie (125) et la première entrée de porte ET (145) et/ou le deuxième élément de connexion (170b) disposé entre la deuxième interface de sortie (135) et la deuxième entrée de porte ET (150), est/sont conçu(s) sous forme de ligne filaire unique.

6. Réseau de communication (105) selon l'une quelconque des revendications précédentes, dans lequel le premier composant électronique (110) est configuré sous la forme d'un dispositif de commande et/ou le deuxième composant électronique (115) est configuré sous la forme d'un capteur et/ou d'un dispositif de commande supplémentaire.

7. Réseau de communication (105) selon l'une quelconque des revendications précédentes, comportant un troisième composant électronique (175) ayant une troisième interface de sortie (180) pour délivrer en sortie une troisième information et une troisième interface d'entrée (185) pour recevoir une troisième information supplémentaire, la porte ET (&) comportant une troisième entrée de porte ET (190) qui est reliée à la troisième interface de sortie (180), et la sortie de porte ET (155) étant conçue pour générer le résultat en utilisant en outre la troisième information et pour le fournir à la troisième interface d'entrée (185).

8. Procédé (200) de fonctionnement d'un réseau de communication (105) selon l'une quelconque des revendications précédentes, le procédé (200) comprenant les étapes suivantes consistant à :
délivrer en sortie (205) la première information à la première interface de sortie (125) du premier composant électronique (110) et la deuxième information à la deuxième interface de sortie (135) du deuxième composant électronique (115) ;
lire en entrée (210) la première information par l'intermédiaire de la première entrée de porte ET (145) et la deuxième information par l'intermédiaire de la deuxième entrée de porte ET (150) ; et
générer (215) un résultat en utilisant la première information et la deuxième information et fournir le résultat à la première interface d'entrée (130) et/ou à la deuxième interface d'entrée (140) à la sortie de porte ET (155).

9. Procédé (200) selon la revendication 8, dans lequel, à l'étape (205) de délivrance en sortie, la première information est délivrée en sortie sous la forme d'un signal ayant un niveau de signal élevé lorsque la première interface de sortie (125) est dans un état de repos et est délivrée en sortie sous la forme d'un signal supplémentaire ayant un faible niveau de signal lorsque la première interface de sortie (125) est dans un état d'émission et/ou la deuxième information est délivrée en sortie sous la forme du signal ayant un niveau de signal élevé lorsque la deuxième interface de sortie (135) est dans un état de repos et est délivrée en sortie sous la forme d'un signal supplémentaire ayant un faible niveau de signal lorsque la deuxième interface de sortie (135) est dans un état d'émission.
